# EUROPÄISCHE PATENTSCHRIFT

(11) **EP 1 302 679 B1**
(45) Veröffentlichungstag und Bekanntmachung des Hinweises auf die Patenterteilung: **23.06.2004**
(21) Anmeldenummer: 01124490.2
(22) Anmeldetag: 12.10.2001
(51) Int. Cl.: F16C 9/02, F16C 33/10

(54) **Lagerhülse für ein Kurbelwellendrucklager**
Bearing bush for a crankshaft bearing
Douille palier pour un paliers de vilebrequin

(43) Veröffentlichungstag der Anmeldung: 16.04.2003
(73) Patentinhaber: Ford Global Technologies, Inc., Dearborn, Michigan 48126 (US)
(72) Erfinder: Mayer, Kai Martin, 53757 At. Augustin (DE)
(74) Vertreter: Drömer, Hans-Carsten, Dipl.-Ing.

(56) Entgegenhaltungen:
- DE-A- 3 736 390
- US-A- 3 929 394
- US-A- 5 363 557
- US-A- 5 520 466

## Beschreibung

Die Erfindung betrifft eine Lagerhülse für ein Kurbelwellendrucklager mit einem Mantel in Form eines Zylindermantels oder Teilzylindermantels, dessen Innenseite das Radiallager einer Kurbelwelle bildet, und mit beidendseitig an den Mantel ansetzenden und radial nach außen gerichteten Flanschen, deren Außenflächen das Axiallager der Kurbelwelle bilden, wobei an der Innenseite des Mantels in Umfangsrichtung mindestens ein Ölkanal verläuft.

Eine Lagerhülse der eingangs genannten Art ist aus der US 5 363 557 bekannt. Die bekannte Lagerhülse besteht aus zwei separaten Hälften, wobei jede Hälfte einen Mantel in Form einer Halbzylinder-Mantelfläche mit daran endseitig ansetzenden und nach außen gerichteten Flanschen aufweist. Die beiden halbzylindrischen Lagerhülsen werden um eine Kurbelwelle herum angeordnet, um diese gegenüber dem Motorblock zu lagern. Die Lagerung findet dabei sowohl in radialer Richtung - über die Innenseiten des Mantels der Lagerhülsen - als auch in axialer Richtung - über die axial nach außen gerichteten Außenflächen der Flansche - statt. Axiale Kräfte können an einer Kurbelwelle durch den Motor sowie das Getriebe hervorgerufen werden.

Um die Reibung zwischen dem Material der Lagerhülse und der Kurbelwelle herabzusetzen, werden die entsprechenden Lagerflächen mit einem Ölfilm geschmiert. Bei der Lagerhülse gemäß der US 5 363 557 wird das Öl über einen Kanal aus dem Motorblock zur Innenseite des Mantels der Lagerhülse geführt, wobei an der Innenseite in Umlaufrichtung ein Ölkanal zur Verteilung des zugeführten Öls vorgesehen ist. Ferner sind die Übergangskanten zwischen den Flanschen und dem Mantel abgeschrägt, so daß hier zwischen der Lagerhülse und der Kurbelwelle ein im Querschnitt dreieckiger Freiraum entsteht, über welchen sich Öl verteilen kann. Dieses Öl muß dabei vom Ölkanal in der Mitte der Mantelfläche durch das Radiallager der Kurbelwelle zu den Enden des Mantels gedrückt werden, um zu den Freiräumen zu gelangen. Gemäß der US 5 363 557 können in den Außenflächen der Flansche geeignete Vertiefungen vorgesehen werden, um für eine weitere Verteilung des Öls über die Axiallagerfläche zu sorgen.

In der Praxis hat sich gezeigt, daß bei den bekannten Kurbelwellendrucklagern in bestimmten Situationen bzw. bei bestimmten Fahrzeugtypen ein hoher Verschleiß auftreten kann, welcher zu einer schnellen Zerstörung des Lagers führt.

Vor diesem Hintergrund war es Aufgabe der vorliegenden Erfindung, ein verbessertes Kurbelwellendrucklager bereitzustellen, welches eine geringere Verschleißanfälligkeit zeigt.

Diese Aufgabe wird durch Lagerhülsen für ein Kurbelwellendrucklager mit den Merkmalen des Anspruchs 1 gelöst. Vorteilhafte Ausgestaltungen sind in den Unteransprüchen enthalten.

Die erfindungsgemäße Lagerhülse für ein Kurbelwellendrucklager besteht aus einem Mantel, welcher die Form eines (vollständigen) Zylindermantels oder die Form eines Teiles eines Zylindermantels, vorzugsweise eines halben Zylindermantels aufweist, wobei die Innenseite dieses Mantels das Radiallager einer Kurbelwelle bildet. An den beiden Enden des Mantels sind radial nach außen gerichtete Flansche vorgesehen, deren in Axialrichtung gesehen äußeren Flächen das Axiallager einer Kurbelwelle bilden. An der Innenseite der Mantelfläche verläuft in Umfangsrichtung mindestens ein Ölkanal, über welchen zugeführtes Öl bei einer Rotation der Kurbelwelle um die Kurbelwelle herum verteilt wird, um das Radiallager zu schmieren. Der Ölkanal steht im eingebauten Zustand vorzugsweise über eine Bohrung mit einer Ölzufuhr aus dem Motorblock in Verbindung. Weiterhin ist der genannte Ölkanal über eine in Axialrichtung in dem Mantel verlaufende Nut mit mindestens einem der beiden Flansche verbunden.

Durch die Verbindung des Ölkanals mit einem der Flansche wird erreicht, daß dieser Flansch bevorzugt mit Öl versorgt wird, so daß das an diesem Flansch ausgebildete Axiallager eine gute Schmierung aufweist. Wie sich gezeigt hat, können hierdurch die Verschleißausfälle bei bestimmten Konfigurationen von Motoren bzw. Getrieben vermieden werden. Die Nut kann zu nur einem der Flansche oder zu beiden Flanschen führen. Eine Führung zu beiden Flanschen erhöht insgesamt das Ölangebot und sorgt damit für eine sehr gute Lagerschmierung. Jedoch läßt sich auch schon mit der Führung der Nut zu nur einem der Lager - dem stärker belasteten - eine signifikant verbesserte Tragfähigkeit des Lagers erreichen. Die genannten Verschleißerscheinungen sind nämlich nur an einem der beiden Axiallager beobachtet worden, was seine Ursache in Belastungen hat, die bevorzugt in einer bestimmten Axialrichtung auftreten. Diese einseitige Belastung kann in bestimmten Fällen so groß werden, daß sie zu einem vorzeitigen Verschleiß herkömmlicher Kurbelwellendrucklager führt. Einem derartigen Verschleiß wirkt bei der erfindungsgemäßen Lagerhülse bereits die einseitige Nut im Mantel entgegen, da sie für eine erleichterte Ölzufuhr zu dem stärker belasteten Axiallager sorgt. Die einseitige Führung einer Nut zu nur einem der Flansche hat ferner den Vorteil, daß sich der Ölverlust und Öldruckverlust im Gesamtsystem in engen Grenzen hält.

Gemäß einer bevorzugten Ausgestaltung ist die beschriebene Nut an der Außenseite des Mantels angeordnet und durch mindestens einen den Mantel durchstoßenden Kanal mit dem Ölkanal an der Innenseite des Mantels verbunden. Durch die Anordnung der Nut an der Außenseite des Mantels wird gewährleistet, daß der Ölfluß durch die Nut unbeeinträchtigt von dem aus dem Radiallager ausströmenden Öl ist, da die Nut einen Ölkanal zwischen der Außenseite des Mantels und dem Motorblock bildet, also zwischen zwei relativ zueinander ruhenden Teilen. Bei nur einer Nut muß bei deren Anordnung die Drehrichtung der Kurbelwelle berücksichtigt werden.

Bei der zuletzt beschriebenen Anordnung der Nut an der Außenseite des Mantels ist diese vorteilhafterweise durch eine den Flansch durchstoßende Öffnung mit der Außenseite des Flansches verbunden. Über diese Öffnung kann dann das Öl aus der Nut an die Fläche des Axiallagers geführt und dort von der sich drehenden Kurbelwelle aufgenommen und verteilt werden.

An den Flanschen sind vorzugsweise Freiräume ausgebildet, über welche eine weitere Ölverteilung über die Fläche der Axiallager erfolgt. Vorzugsweise stehen diese Freiräume dabei mit der oben genannten Nut in Verbindung, um das über die Nut transportierte Öl direkt aufzunehmen.

Im Folgenden wird die Erfindung mit Hilfe der Figuren beispielhaft erläutert. Es zeigt:
Figur 1 eine Ansicht von unten auf eine halbzylinderförmige Lagerhülse;
Figur 2 die Lagerhülse nach Figur 1 in einer schematisierten Perspektive.

In den Figuren ist eine halbzylinderförmige Lagerhülse 1 dargestellt, welche mit einer zweiten derartigen Hülse um die Kurbelwelle eines Kraftfahrzeuges herum zusammengesetzt werden kann, um die Kurbelwelle gegenüber dem Motorblock zu lagern. Typischerweise wird eine Kurbelwelle dabei über mehrere derartiger Kurbelwellendrucklager mit dem Motorblock verbunden .

Die in den Figuren dargestellte Lagerhülse 1 besteht aus einem Mantel 6, welcher die Form einer axial halbierten Zylindermantelfläche hat. An den beiden axialen Enden des Mantels 6 sind radial nach außen gerichtete Flansche 5 und 8 angeordnet. Im zusammengebauten Zustand eines Kurbelwellendrucklagers bildet die Innenseite des Mantels 6 das Radiallager der Kurbelwelle, während die Außenflächen der Flansche 5 und 8 das Axiallager der Kurbelwelle bilden.

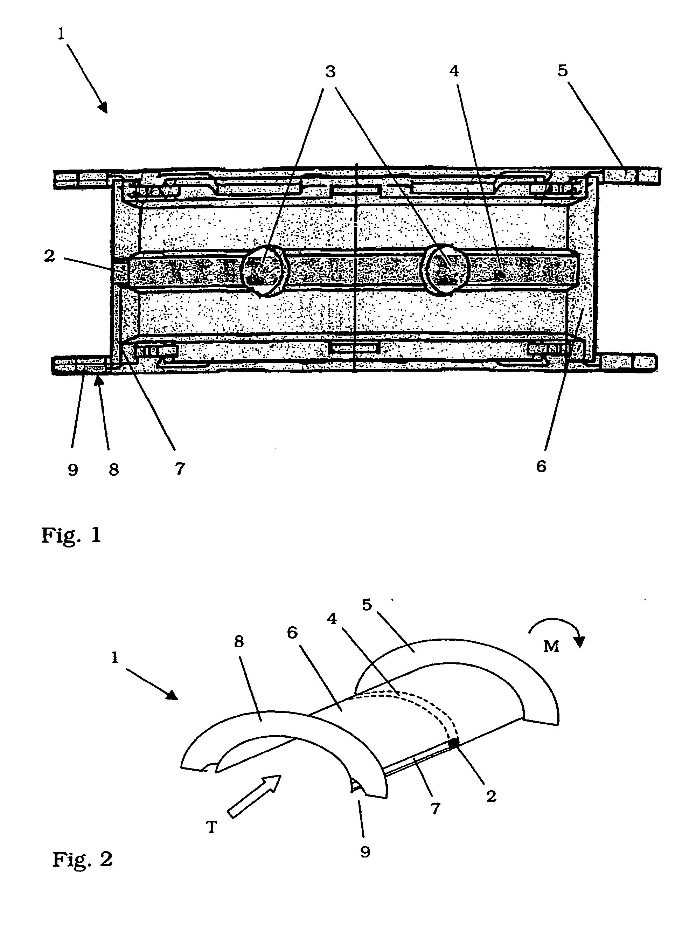

An der Innenseite des Mantels 6 ist ein Ölkanal 4 umlaufend ausgebildet. Wie aus Figur 1 erkennbar ist, ist der Ölkanal 4 mit zwei den Mantel 6 durchsetzenden Bohrungen 3 kommunizierend verbunden, so daß über diese Bohrungen 3 aus einer im Motorblock ausgebildeten Ölzufuhr (nicht dargestellt) Öl in den Ölkanal 4 gefördert werden kann.

Wie aus Figur 1 ferner erkennbar ist, ist im Mantel 6 eine weitere Öffnung oder Bohrung 2 ausgebildet, die den Mantel 6 durchsetzt und die mit dem Ölkanal 4 kommuniziert. Die Bohrung 2 wird durch einen in die Außenseite des Mantels 6 eingelassenen Kanal 7 zu dem (in Figur 1 unteren, in Figur 2 linken) Flansch 8 fortgesetzt. Im Flansch 8 selbst ist wiederum eine Öffnung 9 vorgesehen, durch welche das Öl zur Vorderseite des Flansches treten kann. Durch den Kanal 7 und die Bohrungen 2 und 9 kann somit Öl aus dem Ölkanal 4 in Richtung des Flansches 8 gefördert werden, um das dort ausgebildete Axiallager zu schmieren. Durch die rauhe Oberfläche der Kurbelwelle wird dabei das Öl bei der Rotation der Kurbelwelle in das Axiallager gezogen, so daß die Kurbelwelle aufgrund hydrodynamischer Effekte relativ zum Lager aufschwimmt. Der beschriebene Weg des Öls ist in Figur 1 durch eine Schattierung hervorgehoben dargestellt.

In Figur 2 sind durch die Buchstaben T und M die Lagen des Getriebes (T) einerseits sowie des Motors (M) andererseits relativ zur Lagerhülse 1 angedeutet. Ferner deutet ein gekrümmter Pfeil die Drehrichtung der Kurbelwelle bzw. des Motors an. Hierdurch wird erkennbar, daß der an der Außenseite des Mantels 6 ausgebildete Kanal 7 zu dem näher am Getriebe T gelegenen Flansch 8 führt, um die bevorzugt in Richtung vom Getriebe T zum Motor M auftretenden Axialbelastungen (Blockpfeil) durch eine verbesserte Ölschmierung verschleißarm abzufangen.

## Patentansprüche

1. Lagerhülse (1) für ein Kurbelwellendrucklager, mit einem Mantel (6) in Form eines Zylindermantels oder Teilzylindermantels, dessen Innenseite das Radiallager einer Kurbelwelle bildet, und mit beidendseitig an den Mantel ansetzenden und radial nach außen gerichteten Flanschen (5, 8), deren Außenflächen das Axiallager der Kurbelwelle bilden, wobei an der Innenseite des Mantels (6) in Umfangsrichtung mindestens ein Ölkanal (4) verläuft,
**dadurch gekennzeichnet, daß** der Ölkanal (4) über eine axial im Mantel verlaufende Nut (7) mit mindestens einem der Flansche (8) verbunden ist.

2. Lagerhülse nach Anspruch 1,
**dadurch gekennzeichnet, daß**
die Nut (7) an der Außenseite des Mantels (6) angeordnet und durch einen den Mantel durchstoßenden Kanal (2) mit dem Ölkanal (4) verbunden ist.

3. Lagerhülse nach Anspruch 2,
**dadurch gekennzeichnet, daß**
die Nut (7) durch eine den Flansch (8) durchstoßende Öffnung (9) mit der Außenseite des Flansches (8) verbunden ist.

4. Lagerhülse nach einem der Ansprüche 1 bis 3,
**dadurch gekennzeichnet, daß**
an den Flanschen (5, 8) Freiräume zur Ölverteilung ausgebildet sind.

## Claims

1. Bearing sleeve (1) for a crankshaft thrust bearing, having a shell (6) in the form of a lateral cylinder surface or a partial lateral cylinder surface, the inside of which forms the radial bearing of a crankshaft, and having flanges (5, 8) which start at both ends of the shell and are directed radially outward, and the outer surfaces of which form the axial bearing of the crankshaft, at least one oil passage (4) running in the circumferential direction on the inside of the shell (6), **characterized in that** the oil passage is connected to at least one of the flanges (8) via a groove (7) running axially in the shell.

2. Bearing sleeve according to Claim 1, **characterized in that** the groove (7) is arranged on the outside of the shell (6) and is connected to the oil passage (4) by a passage (2) passing through the shell.

3. Bearing sleeve according to Claim 2, **characterized in that** the groove (7) is connected to the outside of the flange (8) by an opening (9) passing through the flange (8).

4. Bearing sleeve according to one of Claims 1 to 3, **characterized in that** clearance spaces for the oil distribution are formed at the flanges (5, 8).

## Revendications

1. Douille palier (1) pour un palier de vilebrequin, comprenant une enveloppe (6) en forme d'enveloppe cylindrique ou d'enveloppe partiellement cylindrique, dont le côté interne forme le palier radial d'un vilebrequin, et comprenant des brides (5, 8) se plaçant du côté des deux extrémités sur l'enveloppe et orientées radialement vers l'extérieur, dont les surfaces extérieures forment le palier axial du vilebrequin,
au moins un canal d'huile (4) s'étendant dans la direction périphérique sur le côté interne de l'enveloppe (6),
**caractérisée en ce que** le canal d'huile (4) est connecté à au moins l'une des brides (8) par le biais d'une rainure (7) s'étendant axialement dans l'enveloppe.

2. Douille palier selon la revendication 1,
**caractérisée en ce que**
la rainure (7) est disposée sur le côté externe de l'enveloppe (6) et est connectée au canal d'huile (4) par un canal (2) traversant l'enveloppe.

3. Douille palier selon la revendication 2,
**caractérisée en ce que**
la rainure (7) est connectée au côté externe de la bride (8) par une ouverture (9) traversant la bride (8).

4. Douille palier selon l'une quelconque des revendications 1 à 3,
**caractérisée en ce que**
des espaces libres pour la distribution de l'huile sont réalisés sur les brides (5, 8).
